# EUROPEAN PATENT APPLICATION

(11) **EP 4 723 350 A1**
(43) Date of publication of application: **08.04.2026**
(21) Application number: 24815682.0
(22) Date of filing: 01.04.2024
(51) Int. Cl.: H01M 50/342, H01M 50/152, H01M 50/186, H01M 10/04

(54) **CYLINDRICAL SECONDARY BATTERY**

(30) Priority: 01.06.2023 KR 20230070792
(71) Applicant: SAMSUNG SDI CO., LTD., Yongin-si, Gyeonggi-do 17084 (KR)
(72) Inventor: KIM, Dae Kyu, Yongin-si, Gyeonggi-do 17084 (KR)
(74) Representative: Marks & Clerk LLP
(86) International application number: PCT/KR2024/004197
(87) International publication number: WO 2024/248303

(57) **Abstract**

An embodiment of the present invention relates to a cylindrical secondary battery that may comprise: an electrode assembly; a cylindrical can in which the electrode assembly is accommodated; and a cap assembly which is coupled to the can, is electrically connected to the electrode assembly, is insulated from the can, and includes a cap-up exposed to the outside, a cap-down supporting the cap-up, a vent plate arranged between the cap-up and the cap-down to be spaced apart from the cap-down and having at least one notch formed therein, and an insulator made of an insulating material and disposed between the cap-up and the cap-down and the can, wherein the cap-up includes a plurality of piercing holes formed through a plate surface, a plurality of bridges arranged between the piercing holes, and a plurality of discharge holes formed through the plate surface and spaced apart from the piercing holes. According to an embodiment of the present invention, the discharge direction of internal gas within the secondary battery is not bent and the gas can be discharged in a straight direction, so that the internal gas can be quickly discharged.

## Description

### TECHNICAL FIELD

Embodiments of the present invention relate to a cylindrical secondary battery having an improved structure of a cap assembly.

### BACKGROUND ART

In general, a cylindrical secondary battery includes a cylindrical electrode assembly, a cylindrical can in which the electrode assembly and an electrolyte are accommodated, and a cap assembly coupled to an upper opening of the can to seal the can and allowing current generated in the electrode assembly to flow to an external device.

The cap assembly may be composed of a cap up, a vent plate, and a cap down, and an insulator for insulation may be provided between the vent plate and the cap down. A notch is formed in the vent plate and breaks when gas is generated due to an increase in the internal pressure of the secondary battery. The gas discharged through the notch escapes to the outside of the secondary battery through a piercing hole formed through the cap up. However, it may difficult to discharge the gas quickly because the internal gas can only be discharged through the piercing hole, which is problematic. Therefore, it is necessary to secure a path for rapid discharge when discharging the internal gas of the secondary battery.

The above information disclosed in this Background section is only for enhancement of understanding of the background of the invention and therefore it may contain information that does not constitute prior art.

### DETAILED DESCRIPTION OF THE INVENTION

### TECHNICAL CHALLENGES

An embodiment of the present invention provides a cylindrical secondary battery having a cap assembly capable of quickly discharging internal gas.

### TECHNICAL SOLUTION

A cylindrical secondary battery according to an embodiment of the present invention may include: an electrode assembly; a cylindrical can in which the electrode assembly is accommodated; and a cap assembly which is coupled to the can, is electrically connected to the electrode assembly, is insulated from the can, and includes a cap-up exposed to the outside, a cap-down supporting the cap-up, a vent plate arranged between the cap-up and the cap-down to be spaced apart from the cap-down and having at least one notch formed therein, and an insulator made of an insulating material and disposed between the cap-up and the cap-down and the can, wherein the cap-up includes a plurality of piercing holes formed through a plate surface, a plurality of bridges arranged between the piercing holes, and a plurality of discharge holes formed through the plate surface and spaced apart from the piercing holes.

The cap-up has a lower portion that comes into contact with the vent plate, an upper portion that protrudes upward from the lower portion, and the piercing holes are formed at the boundary between the lower portion and the upper portion.

The discharge holes may be formed in the upper portion of the cap-up.

The discharge holes may be formed along the edge of the upper portion of the cap-up.

The discharge holes may be one of circular, oval, oblong, and arcuate.

The discharge holes may be disposed between both ends of each of the piercing holes.

The discharge holes may be formed outside a minimum welding diameter area in which the cap-up is welded to a bus bar.

The discharge holes may be disposed so that at least part thereof corresponds to the position of the notch.

The discharge holes may be disposed adjacent to the position of the notch.

In addition, a cylindrical secondary battery according to an embodiment of the present invention may include: an electrode assembly; a cylindrical can in which the electrode assembly is accommodated; and a cap assembly which is electrically connected to the electrode assembly, is insulated from the can, and includes a cap-up exposed to the outside and having formed therethrough a plurality of piercing holes, a cap-down supporting the cap-up, a vent plate arranged between the cap-up and the cap-down, is spaced apart from the cap-down and has at least one notch formed therein, and an insulator that is made of an insulating material disposed between the cap-up and the cap-down and the can, wherein the cap-up has a double-hole structure having a plurality of discharge holes spaced apart from the piercing holes and formed therethrough.

The cap-up may have a circular plate-shaped lower portion that comes into contact with the vent plate, a circular plate-shaped upper portion that protrudes upward from the lower portion, and the piercing holes are formed at the boundary between the lower portion and the upper portion.

The discharge holes may be formed along the edge of the upper portion of the cap-up.

The discharge holes may be one of circular, oval, oblong, and arcuate.

The discharge holes may be disposed between both ends of each of the piercing holes.

The discharge holes may be formed outside a minimum welding diameter area in which the cap-up is welded to a bus bar.

The discharge holes may be disposed so that at least part thereof corresponds to the position of the notch.

The discharge holes may be disposed adjacent to the position of the notch.

### EFFECT OF INVENTION

According to an embodiment of the disclosure, the gas inside a secondary battery can be discharged in a straight direction without bending, thereby quickly discharging the internal gas.

### BRIEF DESCRIPTION OF DRAWINGS

FIG. 1 is a perspective view showing a cylindrical secondary battery according to an embodiment of the present invention.
FIG. 2 is a cross-sectional view of the cylindrical secondary battery according to FIG. 1.
FIG. 3 is a plan view showing a cap-up according to an embodiment of the present invention.
FIG. 4 is a side cross-sectional view showing a path through which internal gas is discharged through the cap-up according to FIG. 3.
FIG. 5 is a plan view showing a cap-up according to another embodiment of the present invention.
FIG. 6 is an exemplary plan view showing diameters of a cap-up and discharge holes according to an embodiment of the present invention.
FIG. 7 is an exemplary plan view showing positions of discharge holes of a cap-up according to an embodiment of the present invention.

### BEST MODE FOR CARRYING OUT THE INVENTION

Hereinafter, preferred embodiments of the present invention will be described in detail with reference to the accompanying drawings. Examples of the present invention are provided to more completely explain the present invention to those skilled in the art, and the following examples may be modified in various other forms. The present invention, however, may be embodied in many different forms and should not be construed as being limited to the example (or exemplary) embodiments set forth herein. Rather, these example embodiments are provided so that this disclosure will be thorough and complete and will convey the aspects and features of the present invention to those skilled in the art.

In addition, in the accompanying drawings, sizes or thicknesses of various components are exaggerated for brevity and clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present invention.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

Hereinafter, a cylindrical secondary battery according to an embodiment of the present invention will be described in detail with reference to the attached drawings.

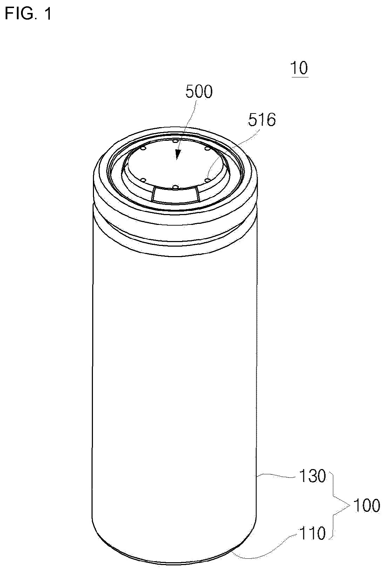

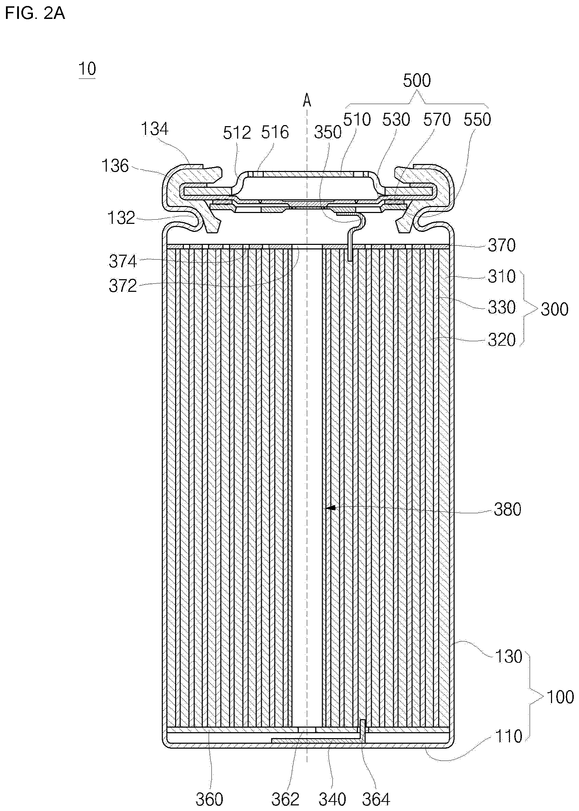

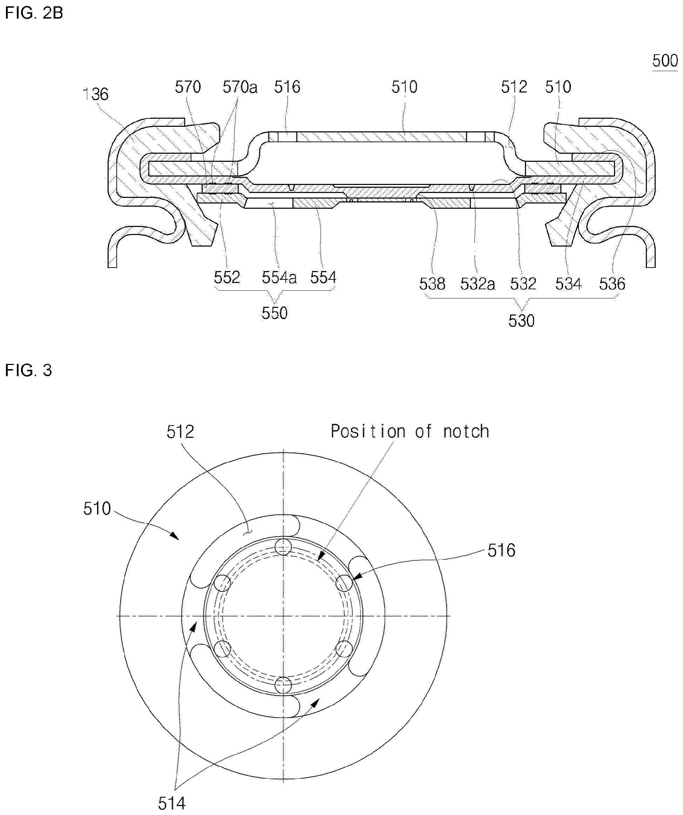

FIG. 1 is a perspective view showing a cylindrical secondary battery according to an embodiment of the present invention. FIG. 2 is a cross-sectional view of the cylindrical secondary battery according to FIG. 1. FIG. 3 is a plan view showing a cap-up according to an embodiment of the present invention.

As shown in FIGS. 1 and 2, the cylindrical secondary battery 10 according to a first embodiment of the present invention may include a cylindrical can 100, an electrode assembly 300 inserted into the inside of the can 100, a cap assembly 500 inserted into one end of the can 100, and an insulating gasket 136 inserted between the can 100 and the cap assembly 500. The electrode assembly 300 may be supported by a center pin 380.

The can 100 includes a circular bottom portion 110 and a side portion 130 extending upward from the bottom portion 110, and the upper portion of the side portion 130 is in an open shape (hereinafter, to be referred to as an opening). The can 100 may be formed from steel, a steel alloy, nickel-plated steel, a nickel-plated steel alloy, aluminum, an aluminum alloy, or an equivalent thereof, but is not limited thereto. The cap assembly 500 is inserted into the opening of the can 100. A beading part 132 and a crimping part 134 may be formed on the side portion 130 to prevent the inserted cap assembly 500 from being separated to the outside through the opening of the can 100.

The beading part 132 is formed at the lower portion with respect to the cap assembly 500 and is in a recessed shape toward the inside of the can 100. The crimping part 134 is formed at the upper portion with respect to the cap assembly 500 and is in a bent shape toward the inside of the can 100. Since the beading part 132 and the crimping part 134 hold the cap assembly 500 upward and downward, the cap assembly 500 is not separated from the can 100. In the manufacture of the secondary battery 10, the electrode assembly 300 may be inserted into the can 100 together with an electrolyte through the opening of the can 100.

The electrode assembly 300 includes a negative electrode plate 310, a positive electrode plate 320, and a separator 330. The negative electrode plate 310 may have a negative electrode active material (e.g., graphite, carbon, etc.) formed on both sides. The positive electrode plate 320 may have a positive electrode active material (e.g., transition metal oxide (LiCoO2, LiNiO2, LiMn2O4, etc.)) formed on both sides. The separator 330 is disposed between the negative electrode plate 310 and the positive electrode plate 320 to prevent short circuits and only allow the movement of lithium ions. The negative electrode plate 310, the positive electrode plate 320, and the separator 330 are wound in a roughly cylindrical shape and may be accommodated inside the can 100. The negative electrode plate 310 may be copper (Cu) or nickel (Ni) foil, the positive electrode plate 320 may be aluminum (Al) foil, and the separator 330 may be polyethylene (PE) or polypropylene (PP), but the present invention does not limit the materials to those listed above. A negative electrode tab 340 that downward protrudes to extend a certain length from the negative electrode plate 310 may be welded, and a positive electrode tab 350 that upward protrudes to extend a certain length from the positive electrode plate 320 may be welded, but the opposite is also possible. The negative electrode tab 340 may be made of copper or nickel, and the positive electrode tab 350 may be made of aluminum, but the present invention does not limit the materials to those listed above. The negative electrode tab 340 may be welded to the bottom portion 110 of the can 100, in which case the can 100 may operate as a negative electrode. Conversely, the positive electrode tab 350 may be welded to the bottom portion 111 of the can 100, in which case the can 100 may operate as a positive electrode. In the present embodiment, the negative electrode tab 340 is welded to the bottom portion 110 of the can 100 as an example.

In addition, a first insulating plate 360 and a second insulating plate 370 may be interposed between the upper and lower portions of the electrode assembly 300. The first insulating plate 360 prevents the positive electrode plate 320 from electrically contacting the bottom portion 110 of the can 100, and the second insulating plate 370 prevents the negative electrode plate 310 from electrically contacting the cap assembly 500.

In the first insulating plate 360, a first hole 362 communicating with the center pin 380 and a second hole 364 allowing the negative electrode tab 340 to be formed therethrough may be formed therethrough. The first hole 362 allows the gas to move upward through the cylindrical center pin 380 when a large amount of gas is generated due to an abnormality in the secondary battery. The negative electrode tab 340 may pass the second hole 364 to then be welded to the bottom portion 110.

In the second insulating plate 370, a first hole 372 allowing gas to move to the cap assembly 500 when a large amount of gas is generated due to an abnormality in the secondary battery may be formed therethrough. In addition, the second insulating plate 370 may have formed therethrough a second hole 374 allowing the positive electrode tab 350 to be formed therethrough. The positive electrode tab 350 may be welded to a cap-down 550 to be described later through the second hole 374. The second hole 374 may be formed in multiple numbers and may serve as inlets through which an electrolyte is injected into the electrode assembly 300 during an electrolyte injection process.

Alternatively, although not shown in the drawing, other current collecting structures may be applied to the secondary battery of the present embodiment. That is, a negative electrode uncoated portion and a positive electrode uncoated portion, in which an active material is not applied to the negative electrode plate and the positive electrode plate, respectively, are formed, and a current collector plate electrically connected to the negative electrode and the positive electrode uncoated portion, respectively, may be provided. Here, the current collector plate may be provided at the position of the aforementioned insulating plate. In this case, the negative electrode current collector plate may be electrically connected to the can, and the positive electrode current collector plate may be electrically connected to the cap assembly in a state of being insulated from the can.

The center pin 380 is in the shape of a hollow circular pipe and can be coupled approximately to the center of the electrode assembly 300. The center pin 380 can be formed of steel, a steel alloy, nickel-plated steel, a nickel-plated steel alloy, aluminum, an aluminum alloy, or polybutylene terephthalate, but the material is not limited thereto. The center pin 380 suppresses deformation of the electrode assembly 300 during charging and discharging of the secondary battery and serves as a passage for gas generated inside the secondary battery to move. In some cases, the center pin 380 may be omitted.

Meanwhile, as shown in FIGS. 1 and 2, the cap assembly 500 may include a cap-up 510 exposed to the outside of the can 100, a cap-down 550 positioned on a lower portion of the cap-up 510, a vent plate 530 positioned between the cap-up 510 and the cap-down 550, and an insulator 570 positioned between the vent plate 530 and the cap-down 550. In FIG. 2, a direction toward the center pin 380 is defined as an inward direction, and a direction away from the center pin 380 is defined as an outward direction.

As shown in FIGS. 2 and 3, the cap-up 510 is positioned at the uppermost part of the cap assembly 500 and may include piercing holes 512 for discharging gas generated inside the can 100 to the outside. The cap-up 510 may have a roughly circular shape, and a predetermined area may convexly protrude upward around the central axis (A). One or more piercing holes 512 may be formed at the boundary between a circular plate portion and a protruding portion. The remaining portions where no piercing holes 512 are formed may be defined as bridges 514. In addition, in the convexly upwardly protruding portion, a plurality of discharge holes 516 may be formed therethrough. A specific structure of the cap-up 510 will be described later. The vent plate 530 is disposed below the cap-up 510, and the vent plate 530 may be coupled in a form that wraps around the edge of the cap-up 510.

The vent plate 530 has a roughly circular shape and has an edge bent toward the edge of the cap-up 510 to then be in contact with the lower edge of the cap-up 510. The vent plate 530 may be bent again toward the inside of the can 100 around a portion in contact with the cap-up 510 so as to contact the upper edge of the cap-up 510. In the vent plate 530, the circular plate portion that is not bent, the portion bent from the vent bottom portion 532 toward the cap-up 510, and the portion bent inward from the first support portion 534 are defined as a vent bottom portion 532, a first support portion 534, and a second support portion 536, respectively. The portion that protrudes convexly downward from the vent bottom portion 532 and comes into contact with the cap-down 550 is defined as a contact portion 538. The vent plate 530 is formed so that all areas except the contact portion 538 do not come into contact with the cap-down 550. At least one notch 532a may be formed on the vent bottom portion 532 of the vent plate 530. For example, the notch 532a may be formed so that at least part thereof correspond to the positions of sub-bridges 516 of the cap-up 510, which will later be described. When the internal gas pressure of the can 100 is greater than a predetermined breaking pressure, as the vent plate 530 is inverted upward, the notch 532a may break. Accordingly, the internal gas of the can 100 can be quickly released to the outside through the piercing holes 512 of the cap-up 510.

The cap-down 550 is disposed below the vent plate 530 and has an approximately circular plate shape. For example, the cap-down 550 may be made of aluminum, an aluminum alloy, and an equivalent thereof, but the material is not limited thereto. The cap-down 550 supports the cap-up 510 to prevent deformation of the cap-up 510 due to external force. The edge of the cap-down 550 is bent toward the vent plate 530, and the insulator 570 is placed at the bent portion. The portion bent toward vent plate 530 is defined as a third support portion 552. In the cap-down 550, the circular plate portion that is not bent is defined as a cap-down bottom portion 554, and the cap-down bottom portion 554 may be formed to have a predetermined gap from the vent bottom portion 532 of the vent plate 530. However, the approximate center portion of the cap-down bottom portion 554 is in a state of being in contact with the contact portion 538 of the vent plate 530. The cap-down 550 may also have piercing holes 554a formed on the cap-down bottom portion 554. Therefore, the internal gas can be released to the outside of the can 100 via the piercing holes 554a of the cap-down 550 through the notch 532a of the vent plate 530 and the piercing holes 512 of the cap-up 510.

The insulator 570 allows the vent plate 530 and the cap-down 550 to remain spaced apart except for the contact portion 538, and serves to insulate the vent plate 530 and the cap-down 550 from each other. Therefore, when viewed from above, the insulator 570 may be formed in the shape a circular ring having a certain width. For example, the insulator 570 may be formed of, but is not limited to, polyethylene (PE), polypropylene (PP), polystyrene (PS), ethylene-vinyl acetate copolymer (EVA), or an equivalent thereof. The insulator 570 may be coupled to the vent plate 530 and the cap-down 550 by ultrasonic welding, laser welding, fusion welding, or other methods.

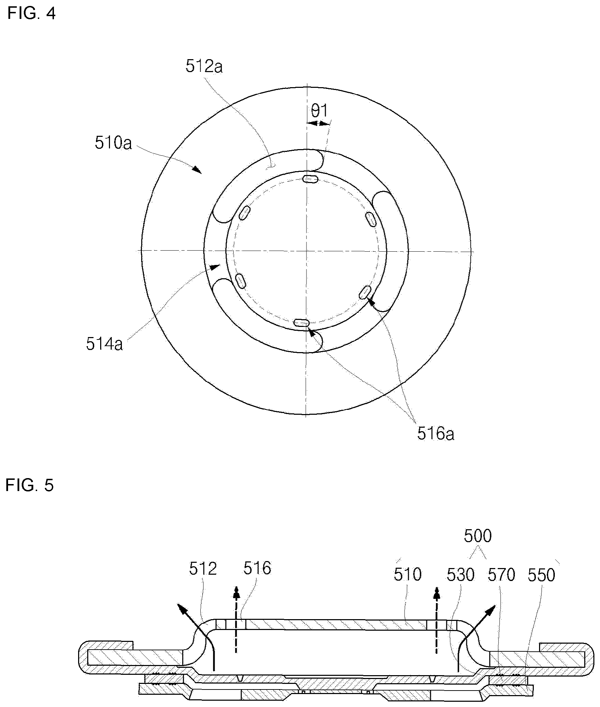

In the secondary battery having the above-described configuration, as the notch 532a of the vent plate 530 breaks during internal gas discharge, the gas is discharged through the piercing holes 512. The gas discharge path penetrating the piercing holes 512 of the cap-up 510 at the upper portion of the electrode assembly 300 has bent paths rather than straight paths (see bent arrows in FIG. 4). Therefore, since the internal gas discharge efficiency is reduced, it is necessary to secure a path for rapid discharge. To this end, the present invention proposes a cap-up structure equipped with separate discharge holes.

Hereinafter, the configurations of a cap-up according to various embodiments of the present invention will be described in detail.

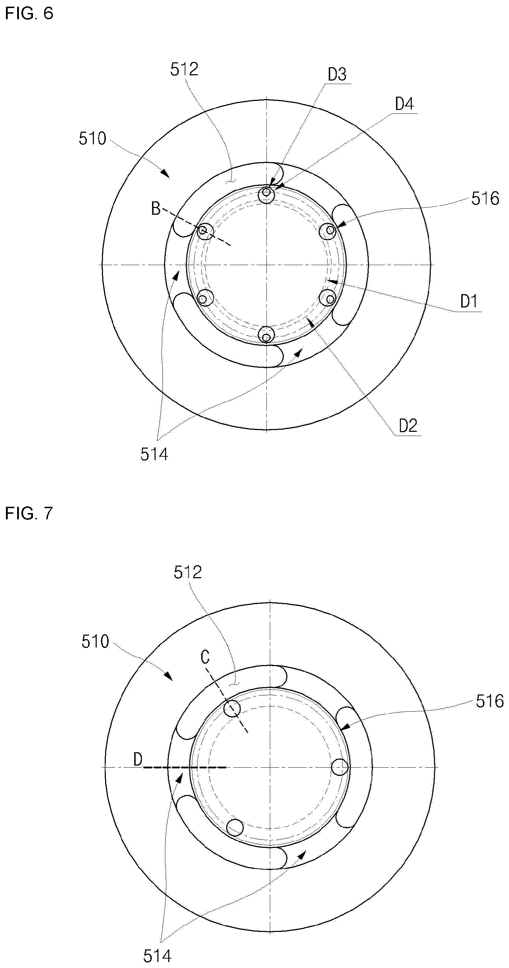

FIG. 4 is a side cross-sectional view showing a path through which internal gas is discharged through the cap-up according to FIG. 3. FIG. 5 is a plan view showing a cap-up according to another embodiment of the present invention. FIG. 6 is an exemplary plan view showing diameters of a cap-up and discharge holes according to an embodiment of the present invention. FIG. 7 is an exemplary plan view showing positions of discharge holes of a cap-up according to an embodiment of the present invention.

Referring again to FIG. 3, the cap-up 510 according to one embodiment of the present invention may include a plurality of piercing holes 512, bridges 514 formed between each of the piercing holes 512, and a plurality of discharge holes 516 formed through an uppermost plate surface of the cap-up 510. On the basis of an imaginary center point of the cap-up 510, the piercing holes 512 and the bridges 514 may be in the shape of an arc having the same center point.

The cap-up 510 is circular in a plane, and an upward protruding portion is also circular. For convenience, the edge area of the cap-up 510 coupled to the vent plate 530 is referred to as a lower portion, and the upward protruding portion is referred to as an upper portion. The plurality of discharge holes 516 may pass through the upper portion of the cap-up 510 along the circumferential direction. The plurality of discharge holes 516 may be arranged at equal intervals from each other. For example, as shown in FIG. 3, the discharge holes 516 may be circular and may six in number. Although not shown in detail in the drawing, the number of discharge holes 516 formed may be from a minimum of 2 to a maximum of 14, which is, however, by way of example, and the number of discharge holes 516 may vary depending on the diameter of the cap-up 510, the number of piercing holes 512, or the like. For example, on the basis of an imaginary center point of the cap-up 510, the discharge holes 516 may be positioned within an angle range between both ends of each of the piercing holes 512. For example, as in B of FIG. 6, the discharge holes 516 may be disposed at the positions close to either end of each of the piercing holes 512. Alternatively, as in C of FIG. 7, the discharge holes 516 may be disposed at the position corresponding to the center of each of the piercing holes 512. The discharge holes 516 may be disposed close to both ends of each of the bridges 514, but may not be disposed at a position corresponding to the center of each of the bridges 514 (position D in FIG. 7). The bridges 514 are blocked parts in the cap-up 510, and thus may somewhat impede the discharge of internal gas.

In addition, the discharge holes 516 may be disposed so that at least part thereof corresponds to the position of the notch 532a formed in the vent plate 530. Depending on the diameters of the discharge holes 516, the extents of overlap between the notch 532a and the discharge holes 516 may vary. However, by forming the discharge holes 516 to have larger diameters than the width of the notch 532a or controlling the positions of the discharge holes 516, the notch 532a and the discharge holes 516 may be aligned in a straight line. That is, as shown in FIG. 4, the gas discharge path may be in a straight line from the electrode assembly 300 (see dotted arrows in FIG. 4). Therefore, the gas discharge path according to the present embodiment can improve straightness compared to the gas discharge path through existing piercing holes (bent arrows in FIG. 4), thereby shortening the gas discharge time.

In the embodiment of FIG. 3, an example in which the plurality of discharge holes 516 are circular has been described, but as in FIG. 5, the discharge holes 516a may be in the form of elongated holes. If elongated, the discharge holes 516a may be in the form of arc-shaped slits. For example, on the basis of an imaginary center point of the cap-up 510, the discharge holes 516a may be elongated holes having 10 degrees in an angle (θ) between both ends. However, the angle (θ or the elongated hole length) between both ends of each of the discharge holes 516a may vary depending on the number and shape of the discharge holes 516a. For example, on the basis of an imaginary center point of the cap-up 510, the discharge holes 516a may be disposed within an angle range between both ends of each of the piercing holes 512a (position B in FIG. 6 and/or position C in FIG. 7).

The diameters of the discharge holes having the above-described structure (516, for convenience, to be described on the basis of circular discharge holes) may vary depending on the diameter of the upper portion of the cap-up 510. The diameter of the cap-up 510 and the diameters of the discharge holes 516 will be described with reference to FIG. 6.

For example, a cylindrical secondary battery having a diameter of 18-21 ∅ (pi) will be described by way of example. Here, the minimum diameter (D1) of the upper portion of the cap-up 510 for welding the busbar may be 6.5 pi. The minimum diameter of the notch 532a of the vent plate 530 that breaks when the gas is discharged, which is the diameter D2 from the center point of the cap-up to the notch, may be 7 pi. The diameter of the notch 532a may be a minimum of 7 pi and a maximum of 9.5 pi. An area for welding a bus bar needs to be secured by placing the discharge holes 516 outside the minimum diameter (D1) of the upper portion of the cap-up 510. Accordingly, the minimum diameter (D3) of the discharge holes 516 may be 0.5 pi, and the maximum diameter (D4) thereof may be 1.15 pi. Depending on the diameters of the discharge holes 516, the positions of the discharge holes 516 may or may not overlap the notch 532a. If the positions of the discharge holes 516 overlap the notch 532a, the gas discharge path becomes straight and the gas discharge time can be shortened. However, even if the positions of the discharge holes 516 do not overlap the notch 532a, the gas can be discharged smoothly because the gas discharge path is almost in a straight line compared to the gas discharge path passing through the piercing holes 512. The diameter of the upper portion of the cap-up 510 and the diameters of the discharge holes 516 may vary depending on the diameter of the cylindrical secondary battery.

While the foregoing embodiment is only one embodiment for carrying out the secondary battery according to the present invention, which is not limited to the embodiment, it will be understood by a person skilled in the art that various changes in form and details may be made therein without departing from the spirit and scope of the present invention as defined by the following claims.

## Claims

1. A cylindrical secondary battery comprising:
an electrode assembly;
a cylindrical can in which the electrode assembly is accommodated; and
a cap assembly which is coupled to the can, is electrically connected to the electrode assembly, is insulated from the can, and includes a cap-up exposed to the outside, a cap-down supporting the cap-up, a vent plate arranged between the cap-up and the cap-down to be spaced apart from the cap-down and having at least one notch formed therein, and an insulator made of an insulating material and disposed between the cap-up and the cap-down and the can,
wherein the cap-up includes a plurality of piercing holes formed through a plate surface, a plurality of bridges arranged between the piercing holes, and a plurality of discharge holes formed through the plate surface and spaced apart from the piercing holes.

2. The cylindrical secondary battery as claimed in claim 1, wherein the cap-up has a lower portion that comes into contact with the vent plate, an upper portion that protrudes upward from the lower portion, and the piercing holes are formed at the boundary between the lower portion and the upper portion.

3. The cylindrical secondary battery as claimed in claim 2, wherein the discharge holes are formed in the upper portion of the cap-up.

4. The cylindrical secondary battery as claimed in claim 3, wherein the discharge holes are formed along the edge of the upper portion of the cap-up.

5. The cylindrical secondary battery as claimed in claim 4, wherein the discharge holes may be one of circular, oval, oblong, and arcuate.

6. The cylindrical secondary battery as claimed in claim 4, wherein the discharge holes are disposed between both ends of each of the piercing holes.

7. The cylindrical secondary battery as claimed in claim 4, wherein the discharge holes are formed outside a minimum welding diameter area in which the cap-up is welded to a bus bar.

8. The cylindrical secondary battery as claimed in claim 4, wherein the discharge holes are disposed so that at least part thereof corresponds to the position of the notch.

9. The cylindrical secondary battery as claimed in claim 4, wherein the discharge holes are disposed adjacent to the position of the notch.

10. A cylindrical secondary battery comprising:
an electrode assembly;
a cylindrical can in which the electrode assembly is accommodated; and
a cap assembly which is electrically connected to the electrode assembly, is insulated from the can, and includes a cap-up exposed to the outside and having formed therethrough a plurality of piercing holes, a cap-down supporting the cap-up, a vent plate arranged between the cap-up and the cap-down, is spaced apart from the cap-down and has at least one notch formed therein, and an insulator that is made of an insulating material disposed between the cap-up and the cap-down and the can,
wherein the cap-up has a double-hole structure having a plurality of discharge holes spaced apart from the piercing holes and formed therethrough.

11. The cylindrical secondary battery as claimed in claim 10, wherein the cap-up has a circular plate-shaped lower portion that comes into contact with the vent plate, a circular plate-shaped upper portion that protrudes upward from the lower portion, and the piercing holes are formed at the boundary between the lower portion and the upper portion.

12. The cylindrical secondary battery as claimed in claim 11, wherein the discharge holes are formed along the edge of the upper portion of the cap-up.

13. The cylindrical secondary battery as claimed in claim 12, wherein the discharge holes are one of circular, oval, oblong, and arcuate.

14. The cylindrical secondary battery as claimed in claim 13, wherein the discharge holes are disposed between both ends of each of the piercing holes.

15. The cylindrical secondary battery as claimed in claim 13, wherein the discharge holes are formed outside a minimum welding diameter area in which the cap-up is welded to a bus bar.

16. The cylindrical secondary battery as claimed in claim 13, wherein the discharge holes are disposed so that at least part thereof corresponds to the position of the notch.

17. The cylindrical secondary battery as claimed in claim 13, wherein the discharge holes are disposed adjacent to the position of the notch.
